# EUROPÄISCHE PATENTSCHRIFT

(11) **EP 0 762 202 B1**
(45) Veröffentlichungstag und Bekanntmachung des Hinweises auf die Patenterteilung: **22.12.1999**
(21) Anmeldenummer: 96113161.2
(22) Anmeldetag: 16.08.1996
(51) Int. Cl.: G03C 7/392, G03C 1/06, G03C 1/34

(54) **Silberhalogenidaufzeichnungsmaterial**
Silver halide recording material
Matériau d'enregistrement à l'halogénure d'argent

(30) Priorität: 29.08.1995 DE 19531688
(43) Veröffentlichungstag der Anmeldung: 12.03.1997
(73) Patentinhaber: Agfa-Gevaert AG, 51373 Leverkusen (DE)
(72) Erfinder: Missfeldt, Michael, Dr., 42799 Leichlingen (DE); Willsau, Johannes, Dr., 51381 Leverkusen (DE); Büscher, Ralf, Dr., 53797 Lohmar (DE); Bell, Peter, Dr., 50679 Köln (DE); Borst, Hans-Ulrich, Dr., 50189 Elsdorf (DE)

(56) Entgegenhaltungen:
- EP-A- 0 304 296
- WO-A-90/08978
- US-A- 4 668 616

## Beschreibung

Die Erfindung betrifft ein fotografisches Aufzeichnungsmaterial mit wenigstens einer Silberhalogenidemulsionsschicht und gegebenenfalls weiteren Schichten, das in mindestens einer seiner Schichten eine Verbindung der allgemeinen Formel I enthält. Das Material weist verbesserte Körnigkeit bei konstanter Empfindlichkeit und einen geringeren Schleieranstieg bei Lagerung auf.

Bekanntlich führt eine Verringerung der Körnigkeit zur Qualitätsverbesserung von fotografischen Materialien, die besonders bei Bildvergrößerungen auffällt.

In WO 91/12 566 und EP-A-0 557 695 werden als körnigkeitserniedrigend core/shell-Emulsionen beschrieben, die im Kern jeweils einen bestimmten Iodidgehalt aufweisen. Eine ganz andere Maßnahme zur Verringerung der Körnigkeit, nämlich der Einsatz von DIR-Verbindungen, wird in EP-A-0 446 863 und EP-A-0 507 092 beschrieben. Auch bestimmte Kupplerstrukturen können sich hier günstig auswirken, wie in EP-A-0 422 595 und EP-A-0 566 115 beschrieben wird. Die Reaktion von Entwickleroxidationsprodukt (EOP) mit bestimmten kornhaftenden Verbindungen als Grund für ein verbessertes Empfindlichkeits/Körnigkeitsverhältnis wird in EP-A-0 377 181 beschrieben.

Aus der WO-A-9 008 978 sind antistatische Zusammensetzungen bekannt, die cyclische Phosphazensalze enthalten. Eine weitere Verwendung von Phosphoniumverbindungen ist aus der US 4.668.616 bekannt, dort ist ein Verfahren zur Härtung von Gelatine unter Einsatz von bestimmten Phosphoniumverbindungen offenbart.

Häufig haben Maßnahmen zur Beeinflussung bestimmter Zielgrößen zur Folge, daß andere fotografische Eigenschaften darunter leiden.

Es wurde gefunden, daß die Körnigkeit durch Zusatz mindestens einer Verbindung der allgemeinen Formel I verbessert werden kann, ohne daß die Empfindlichkeit oder eine sonstige wichtige fotografische Eigenschaft leidet; weiterhin konnte ein verminderter Schleieranstieg bei Lagerung beobachtet werden.

Gegenstand der vorliegenden Erfindung ist ein lichtempfindliches fotografisches Aufzeichnungsmaterial mit mindestens einer lichtempfindlichen Silberhalogenidemulsionsschicht und gegebenenfalls weiteren Schichten, dadurch gekennzeichnet, daß es in mindestens einer seiner Schichten eine Verbindung der allgemeinen Formel I enthält 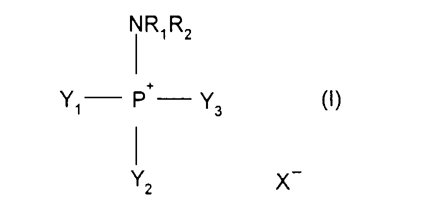 worin bedeuten:
- Y₁, Y₂, Y₃: je einen der folgenden Reste 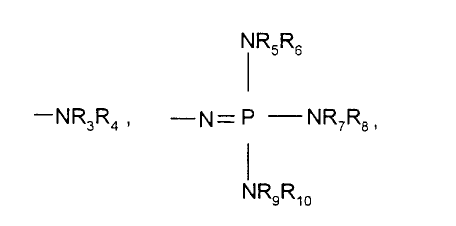 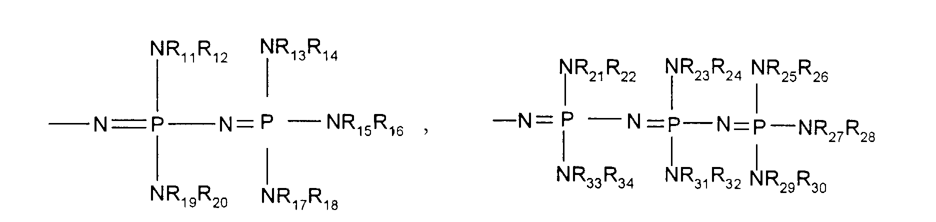
- R₁ bis R₃₄: H, Alkyl oder Aryl; zwei am gleichen N-Atom befindliche Reste (R₁ bis R₃₄) können einen mindestens ein N-Atom und gegebenenfalls weitere Heteroatome enthaltenden 5-, 6- oder höhergliedrigen Ring vervollständigen; mit der Maßgabe, daß es sich nicht um einen 1-Pyridinyl-Rest handelt, zwei an benachbarten N-Atomen befindliche Reste (R₁ bis R₃₄) können unter Einbeziehung der beiden N-Atome und mindestens eines P-Atoms einen Ring vervollständigen;
- X⁻: ein zum Ladungsausgleich erforderliches Anion, z.B. Cl⁻, Br⁻ oder Tosylat (TosO⁻).

Die durch R₁ bis R₃₄ dargestellten Alkyl- bzw. Arylreste können gegebenenfalls substituiert sein, z.B. mit Chlor. Alkylreste weisen bevorzugt bis zu 6 C-Atomen auf; Beispiele sind Methyl, Ethyl, Isopropyl, Butyl, Tertiärbutyl (^{t}Bu), Hexyl.

Beispiele für vervollständigte heterocyclische Ringe sind Pyrrolidin-, Piperidin-, Morpholin-, Piperazin-, 1,3-Diaza-2-phosphacyclopentan-, 1,3-Diaza-2-phosphacyclohexan- und 1,3-Diaza-2-phospha-cycloheptanringe.

Geeignete Beispiele für die erfindungsgemäß verwendeten Verbindungen sind im folgenden aufgeführt:

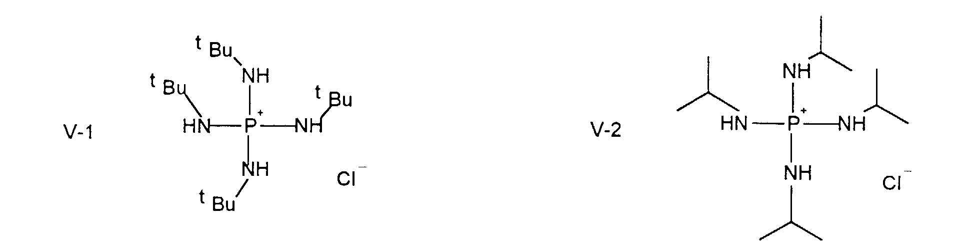

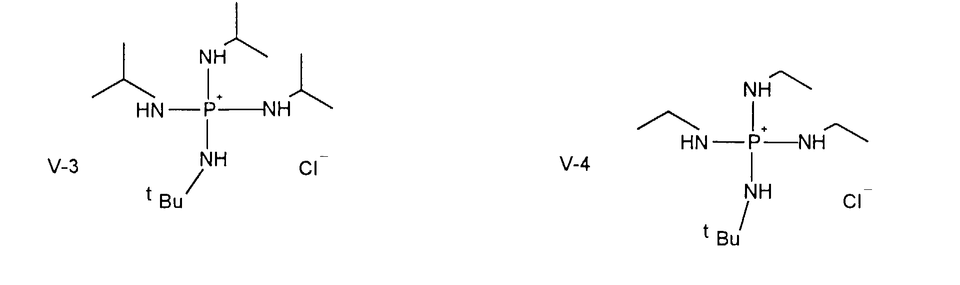

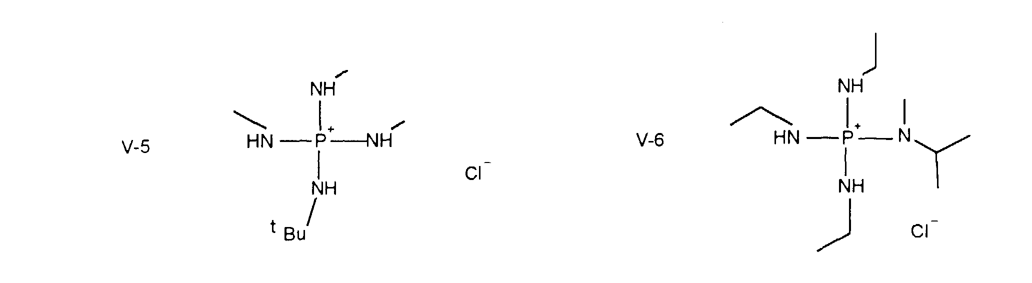

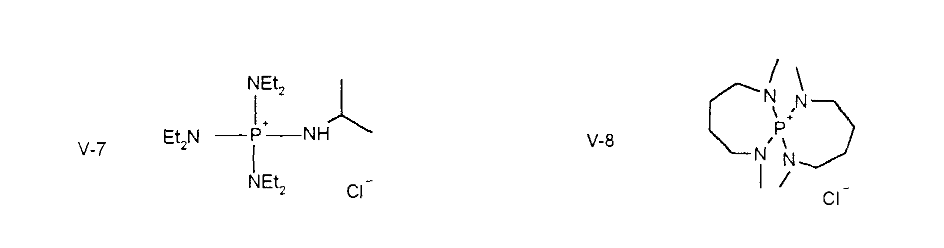

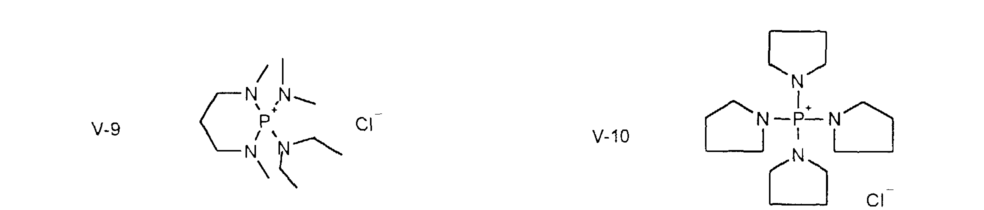

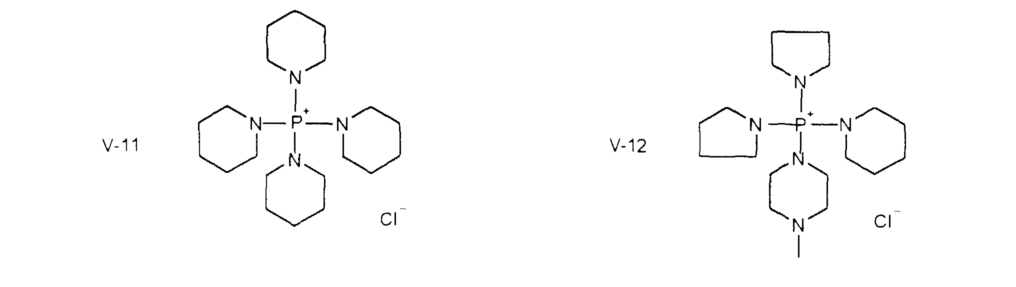

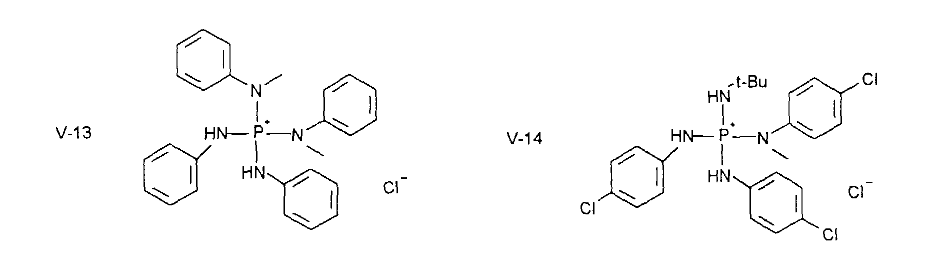

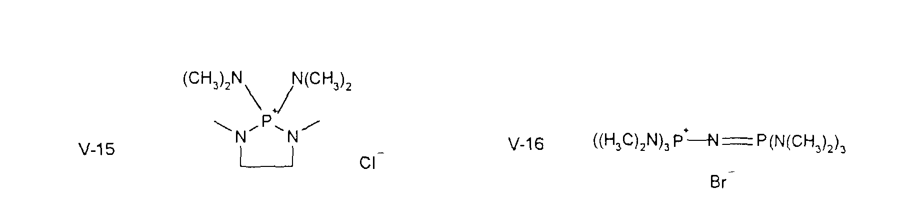

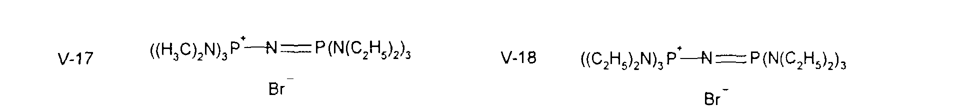

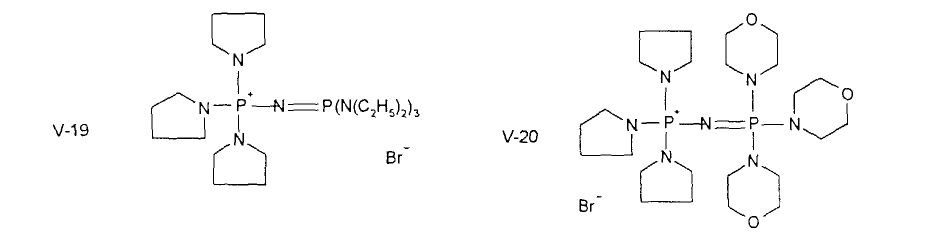

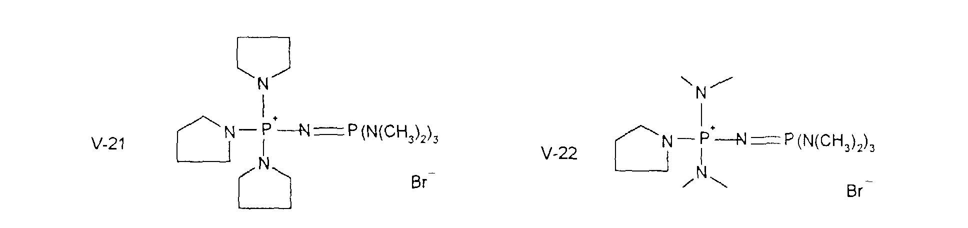

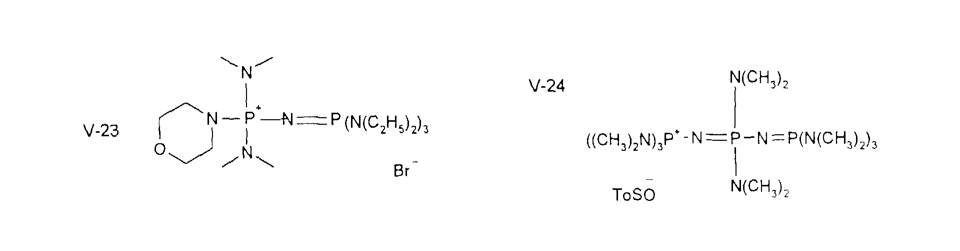

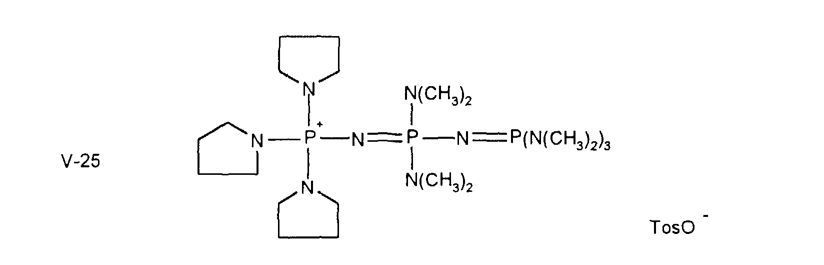

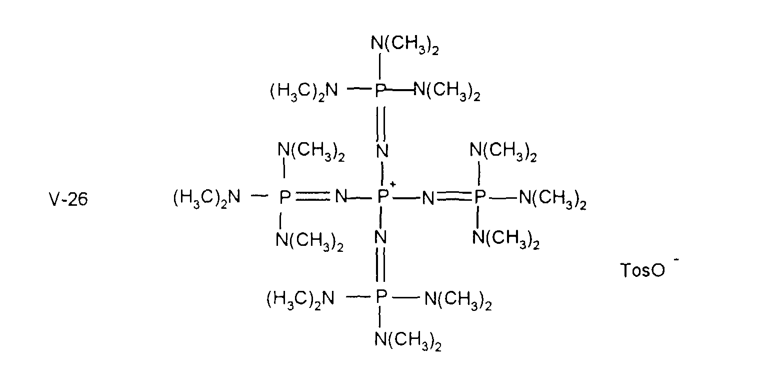

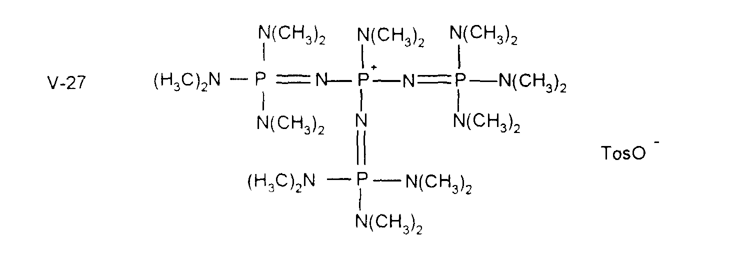

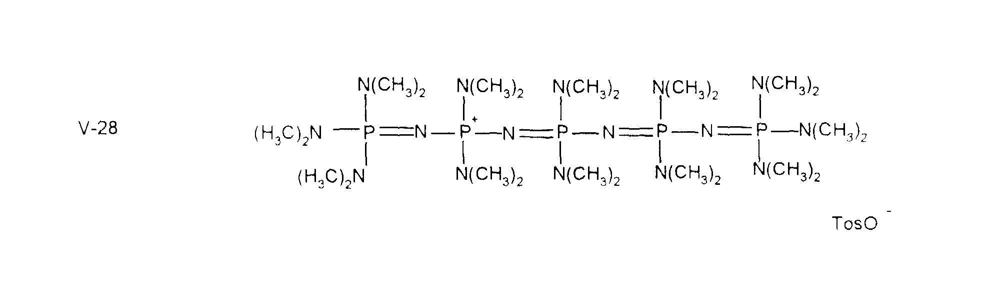

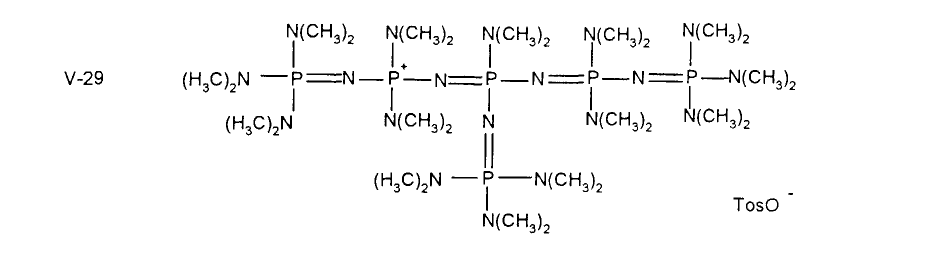

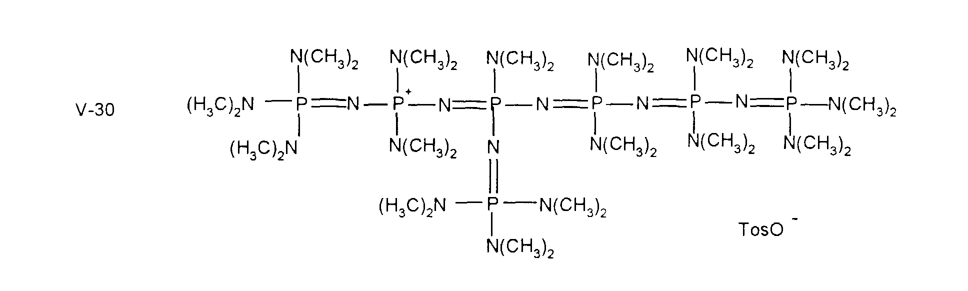

Die nur ein P-Atom enthaltenden Phosphazensalze wurden wie in BE 671 026 beschrieben hergestellt. Phosphazene mit 2 und mehr P-Atomen konnten analog nach den von R. Schwesinger in Angew. Chem. **103**, 1376 (1991) und Angew. Chem. **105**, 1420 (1993) beschriebenen Synthesemethoden synthetisiert werden.

Die erfindungsgemäß zu verwendenden Verbindungen werden den Gießlösungen für die betreffenden Schichten als wäßrige Lösung zugesetzt, wobei die Verbindungen einzeln oder als Abmischung von mehreren von ihnen verwendet werden können. Sie können einer oder mehreren der lichtempfindlichen Schichten, also einer blauempfindlichen, einer grünempfindlichen und/oder einer rotempfindlichen Silberhalogenidemulsionsschicht oder aber auch einer zu einer der vorgenannten Schichten benachbarten nicht-lichtempfindlichen Bindemittelschicht zugesetzt werden. Mit Vorteil werden sie sowohl einer der genannten lichtempfindlichen Silberhalogenidemulsionsschichten als auch einer hierzu benachbarten nicht-lichtempfindlichen Bindemittelschicht zugesetzt.

Die Menge der zugesetzten Substanz liegt vorzugsweise zwischen 1 und 200 mg/m².

Das erfindungsgemäße Aufzeichnungsmaterial weist ein verbessertes Körnigkeits/Empfindlichkeitsverhältnis auf, d.h. die Körnigkeit ist verbessert ohne Beeinträchtigung der Empfindlichkeit. Außerdem beobachtet man einen geringeren Schleieranstieg bei Lagerung.

Beispiele für farbfotografische Materialien sind Farbnegativfilme, Farbumkehrfilme, Farbpositivfilme, farbfotografisches Papier, farbumkehrfotografisches Papier, farbempfindliche Materialien für das Farbdiffusionstransfer-Verfahren oder das Silberfarbbleich-Verfahren.

Die fotografischen Materialien bestehen aus einem Träger, auf den wenigstens eine lichtempfindliche Silberhalogenidemulsionsschicht aufgebracht ist. Als Träger eignen sich insbesondere dünne Filme und Folien. Eine Übersicht über Trägermaterialien und auf deren Vorder- und Rückseite aufgetragene Hilfsschichten ist in Research Disclosure 37254, Teil 1 (1995), S. 285 dargestellt.

Die farbfotografischen Materialien enthalten üblicherweise mindestens je eine rotempfindliche, grünempfindliche und blauempfindliche Silberhalogenidemulsionsschicht sowie gegebenenfalls Zwischenschichten und Schutzschichten.

Je nach Art des fotografischen Materials können diese Schichten unterschiedlich angeordnet sein. Dies sei für die wichtigsten Produkte dargestellt:

Farbfotografische Filme wie Colornegativfilme und Colorumkehrfilme weisen in der nachfolgend angegebenen Reihenfolge auf dem Täger 2 oder 3 rotempfindliche, blaugrünkuppelnde Silberhalogenidemulsionsschichten, 2 oder 3 grünempfindliche, purpurkuppelnde Silberhalogenidemulsionsschichten und 2 oder 3 blauempfindliche, gelbkuppelnde Silberhalogenidemulsionsschichten auf. Die Schichten gleicher spektraler Empfindlichkeit unterscheiden sich in ihrer fotografischen Empfindlichkeit, wobei die weniger empfindlichen Teilschichten in der Regel näher zum Träger angeordnet sind als die höher empfindlichen Teilschichten.

Zwischen den grünempfindlichen und blauempfindlichen Schichten ist üblicherweise eine Gelbfilterschicht angebracht, die blaues Licht daran hindert, in die darunter liegenden Schichten zu gelangen.

Farbfotografisches Papier, das in der Regel wesentlich weniger lichtempfindlich ist als ein farbfotografischer Film, weist in der nachfolgend angegebenen Reihenfolge auf dem Träger üblicherweise je eine blauempfindliche, gelbkuppelnde Silberhalogenidemulsionsschicht, eine grünempfindliche, purpurkuppelnde Silberhalogenidemulsionsschicht und eine rotempfindliche, blaugrünkuppelnde Silberhalogenidemulsionsschicht auf; die Gelbfilterschicht kann entfallen.

Abweichungen von Zahl und Anordnung der lichtempfindlichen Schichten können zur Erzielung bestimmter Ergebnisse vorgenommen werden. Zum Beispiel können alle hochempfindlichen Schichten zu einem Schichtpaket und alle niedrigempfindlichen Schichten zu einem anderen Schichtpaket in einem fotografischen Film zusammengefaßt sein, um die Empfindlichkeit zu steigern (DE 25 30 645).

Die Möglichkeiten der unterschiedlichen Schichtanordnungen und ihre Auswirkungen auf die fotografischen Eigenschaften werden in J. Int. Rec. Mats., 1994, Vol. 22, Seiten 183 - 193 beschrieben.

Wesentliche Bestandteile der fotografischen Emulsionsschichten sind Bindemittel, Silberhalogenidkörnchen und Farbkuppler.

Angaben über geeignete Bindemittel finden sich in Research Disclosure 37254, Teil 2 (1995), S. 286.

Angaben über geeignete Silberhalogenidemulsionen, ihre Herstellung, Reifung, Stabilisierung und spektrale Sensibilisierung einschließlich geeigneter Spektralsensibilisatoren finden sich in Research Disclosure 37254, Teil 3 (1995), S. 286 und in Research Disclosure 37038, Teil XV (1995), S. 89.

Fotografische Materialien mit Kameraempfindlichkeit enthalten üblicherweise Silberbromidiodidemulsionen, die gegebenenfalls auch geringe Anteile Silberchlorid enthalten können. Fotografische Kopiermaterialien enthalten entweder Silberchloridbromidemulsionen mit bis 80 mol-% AgBr oder Silberchloridbromidemulsionen mit über 95 mol-% AgCl.

Angaben zu den Farbkupplern finden sich in Research Disclosure 37254, Teil 4 (1995), S. 288 und in Research Disclosure 37038, Teil II (1995), S. 80. Die maximale Absorption der aus den Kupplern und dem Farbentwickleroxidationsprodukt gebildeten Farbstoffe liegt vorzugsweise in den folgenden Bereichen: Gelbkuppler 430 bis 460 nm, Purpurkuppler 540 bis 560 nm, Blaugrünkuppler 630 bis 700 nm.

In farbfotografischen Filmen werden zur Verbesserung von Empfindlichkeit, Körnigkeit, Schärfe und Farbtrennung häufig Verbindungen eingesetzt, die bei der Reaktion mit dem Entwickleroxidationsprodukt Verbindungen freisetzen, die fotografisch wirksam sind, z.B. DIR-Kuppler, die einen Entwicklungsinhibitor abspalten.

Angaben zu solchen Verbindungen, insbesondere Kupplern, finden sich in Research Disclosure 37254, Teil 5 (1995), S. 290 und in Research Disclosure 37038, Teil XIV (1995), S. 86.

Die meist hydrophoben Farbkuppler, aber auch andere hydrophobe Bestandteile der Schichten, werden üblicherweise in hochsiedenden organischen Lösungsmitteln gelöst oder dispergiert. Diese Lösungen oder Dispersionen werden dann in einer wäßrigen Bindemittellösung (üblicherweise Gelatinelösung) emulgiert und liegen nach dem Trocknen der Schichten als feine Tröpfchen (0,05 bis 0,8 µm Durchmesser) in den Schichten vor.

Geeignete hochsiedende organische Lösungsmittel, Methoden zur Einbringung in die Schichten eines fotografischen Materials und weitere Methoden, chemische Verbindungen in fotografische Schichten einzubringen, finden sich in Research Disclosure 37254, Teil 6 (1995), S. 292.

Die in der Regel zwischen Schichten unterschiedlicher Spektralempfindlichkeit angeordneten nicht lichtempfindlichen Zwischenschichten können Mittel enthalten, die eine unerwünschte Diffusion von Entwickleroxidationsprodukten aus einer lichtempfindlichen in eine andere lichtempfindliche Schicht mit unterschiedlicher spektraler Sensibilisierung verhindern.

Geeignete Verbindungen (Weißkuppler, Scavenger oder EOP-Fänger) finden sich in Research Disclosure 37254, Teil 7 (1995), S. 292 und in Research Disclosure 37038, Teil III (1995), S. 84.

Das fotografische Material kann weiterhin UV-Licht absorbierende Verbindungen, Weißtöner, Abstandshalter, Filterfarbstoffe, Formalinfänger, Lichtschutzmittel, Antioxidantien, D_{Min}-Farbstoffe, Zusätze zur Verbesserung der Farbstoff-, Kuppler- und Weißenstabilität sowie zur Verringerung des Farbschleiers, Weichmacher (Latices), Biocide und anderes enthalten.

Geeignete Verbindungen finden sich in Research Disclosure 37254, Teil 8 (1995), S. 292 und in Research Disclosure 37038, Teile IV, V, VI, VII, X, XI und XIII (1995), S. 84 ff.

Die Schichten farbfotografischer Materialien werden üblicherweise gehärtet, d.h., das verwendete Bindemittel, vorzugsweise Gelatine, wird durch geeignete chemische Verfahren vernetzt.

Geeignete Härtersubstanzen finden sich in Research Disclosure 37254, Teil 9 (1995), S. 294 und in Research Disclosure 37038, Teil XII (1995), Seite 86.

Nach bildmäßiger Belichtung werden farbfotografische Materialien ihrem Charakter entsprechend nach unterschiedlichen Verfahren verarbeitet. Einzelheiten zu den Verfahrensweisen und dafür benötigte Chemikalien sind in Research Disclosure 37254, Teil 10 (1995), S. 294 sowie in Research Disclosure 37038, Teile XVI bis XXIII (1995), S. 95 ff. zusammen mit exemplarischen Materialien veröffentlicht.

### Beispiel 1

Ein farbfotografisches Aufzeichnungsmaterial für die Colornegativfarbentwicklung wurde hergestellt (Schichtaufbau 1A), indem auf einen transparenten Schichtträger aus Cellulosetriacetat die folgenden Schichten in der angegebenen Reihenfolge aufgetragen wurden. Die Mengenangaben beziehen sich jeweils auf 1 m². Für den Silberhalogenidauftrag werden die entsprechenden Mengen AgNO₃ angegeben. Alle Silberhalogenidemulsionen waren pro 100 g AgNO₃ mit 0,1 g 4-Hydroxy-6-methyl-1,3,3a,7-tetraazainden stabilisiert.

### Schichtaufbau

- **Schicht 1:**: (Antihaloschicht)
schwarzes kolloidales Silbersol mit
0,3 g Ag
1,2 g Gelatine
0,4 g UV-Absorber XUV-1
0,02 g Trikresylphosphat (TKP)
- **Schicht 2:**: (Mikrat-Zwischenschicht)
Mikrat-Silberbromidiodidemulsion (0,5 mol-% Iodid; mittlerer Korndurchmesser 0,07 µm) aus 0,25 g AgNO₃, mit
1,0 g Gelatine
- **Schicht 3:**: (1. rotsensibilisierte Schicht, gering empfindlich)
rotsensibilisierte Silberbromidiodidemulsion (4 mol-% lodid; mittlerer Korndurchmesser 0,5 µm) aus 2,7 g AgNO₃, mit
2,0 g Gelatine
0,88 g Cyankuppler XC-1
0,05 g farbiger Kuppler XCR-1
0,07 g farbiger Kuppler XCY-1
0,02 g DIR-Kuppler XDIR-1
0,75 g TKP
- **Schicht 4:**: (2. rotsensibilisierte Schicht, hochempfindlich)
rotsensibilisierte Silberbromidiodidemulsion (12 mol-% Iodid; mittlerer Korndurchmesser 1,0 µm) aus 2,2 g AgNO₃, mit
1,8 g Gelatine
0,19 g Cyankuppler XC-2
0,17 g TKP
- **Schicht 5:**: (Zwischenschicht)
0,4 g Gelatine
0,15 g Weißkuppler XW-1
0,06 g Aluminiumsalz der Aurintricarbonsäure
- **Schicht 6:**: (1. grünsensibilisierte Schicht, gering empfindlich)
grünsensibilisierte Silberbromidiodidemulsion (4 mol-% Iodid; mittlerer Korndurchmesser 0,35 µm) aus 1,9 g AgNO₃, mit
1,8 g Gelatine
0,54 g Magentakuppler XM-1
0,065 g farbiger Kuppler XMY-1
0,24 g DIR-Kuppler XDIR-1
0,6 g TKP
- **Schicht 7:**: (2. grünempfindliche Schicht, hochempfindlich)
grünsensibilisierte Silberbromidiodidemulsion (9 mol-% Iodid; mittlerer Korndurchmesser 0,8 µm) aus 1,25 g AgNO₃, mit
1,25 g Gelatine
0,195 g Magentakuppler XM-2
0,05 g farbiger Kuppler XMY-2
0,245 g TKP
- **Schicht 8:**: (Gelbfilterschicht)
gelbes kolloidales Silbersol mit
0,09 g Ag
0,25 g Gelatine
0,08 g Scavenger XSC-1
0,40 g Formaldehydfänger XFF-1
0,08 g TKP
- **Schicht 9:**: (1. blauempfindliche Schicht, gering empfindlich)
blausensibilisierte Silberbromidiodidemulsion (6 mol-% Iodid; mittlerer Korndurchmesser 0,6 µm) aus 0,9 g AgNO₃, mit
2,2 g Gelatine
1,1 g Gelbkuppler XY-1
0,037 g DIR-Kuppler XDIR-1
1,14 g TKP
- **Schicht 10:**: (2. blauempfindliche Schicht, hochempfindlich) blausensibilisierte Silberbromidiodidemulsion (10 mol-% Iodid; mittlerer Korndurchmesser 1,2 µm) aus 0,6 g AgNO₃, mit
0,6 g Gelatine
0,2 g Gelbkuppler XY-1
0,003 g DIR-Kuppler XDIR-1
1,14 g TKP
- **Schicht 11:**: (Mikrat-Schicht)
Mikrat-Silberbromidiodidemulsion (0,5 mol-% Iodid; mittlerer Korndurchmesser 0,06 µm) aus 0,06 g AgNO₃, mit
1,0 g Gelatine
0,3 g UV-Absorber XUV-2
0,3 g TKP
- **Schicht 12:**: (Schutz- und Härtungsschicht)
0,25 g Gelatine
0,75 g Härtungsmittel XH-1
so daß der Gesamtschichtaufbau nach der Härtung einen Quellfaktor ≤ 3,5 hatte.

Im Beispiel 1 verwendete Verbindungen:

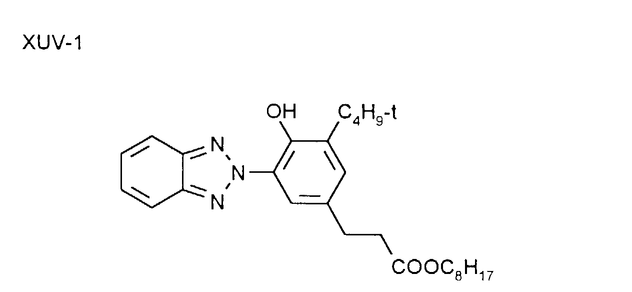

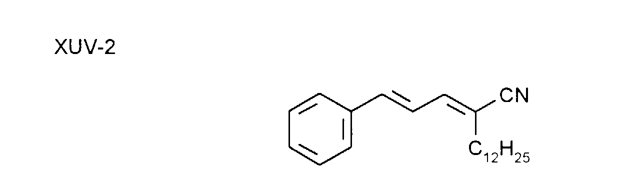

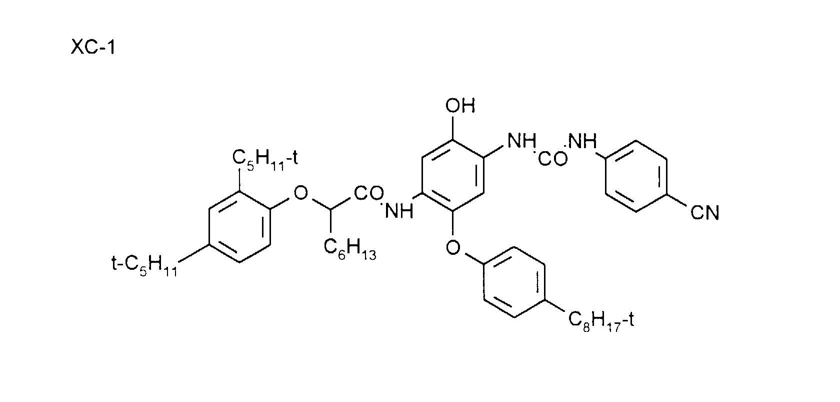

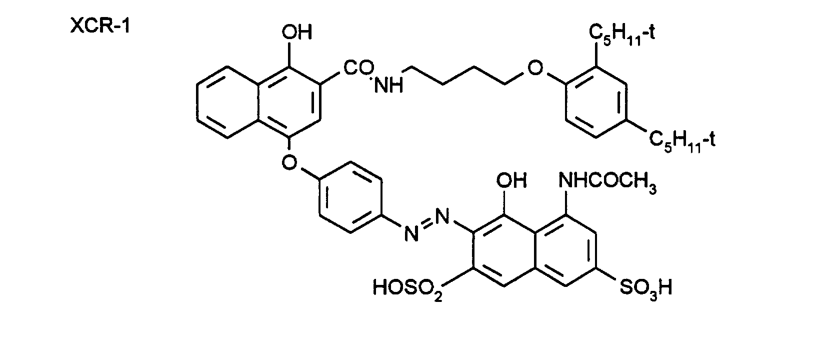

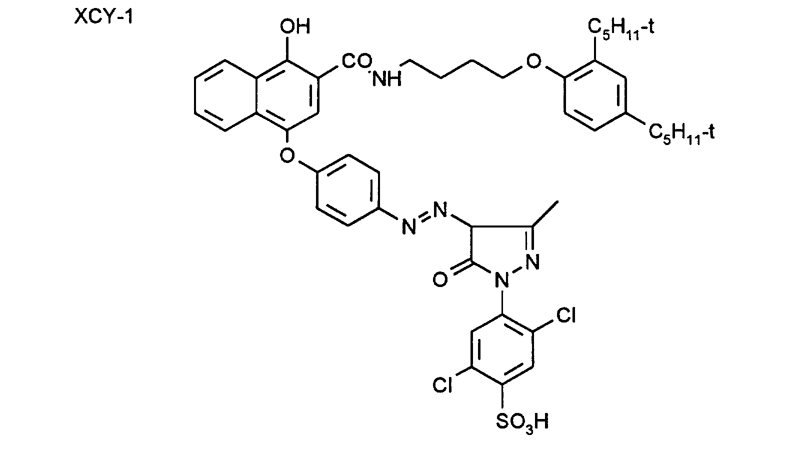

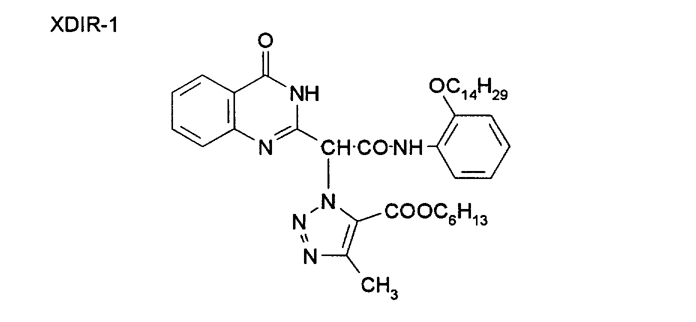

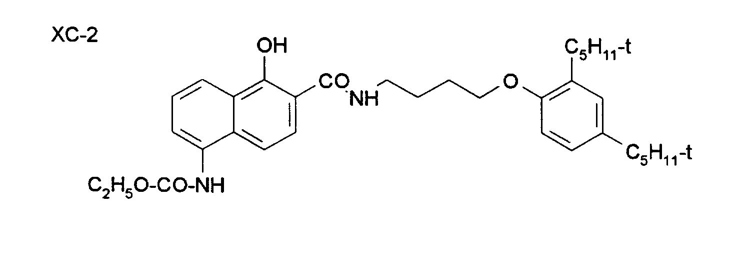

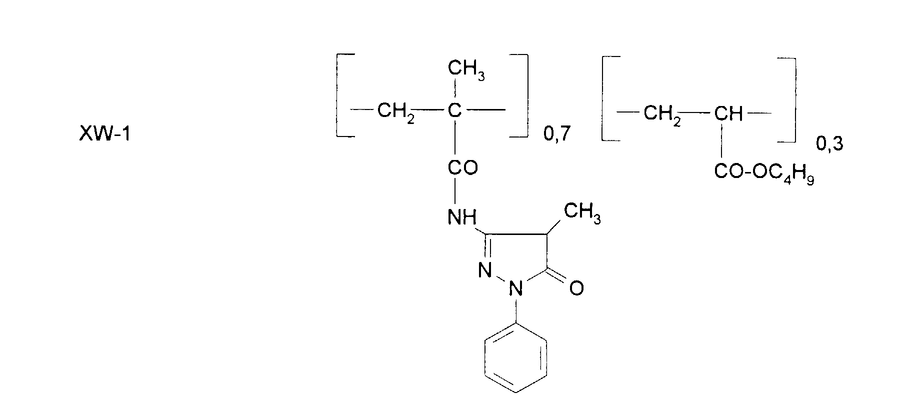

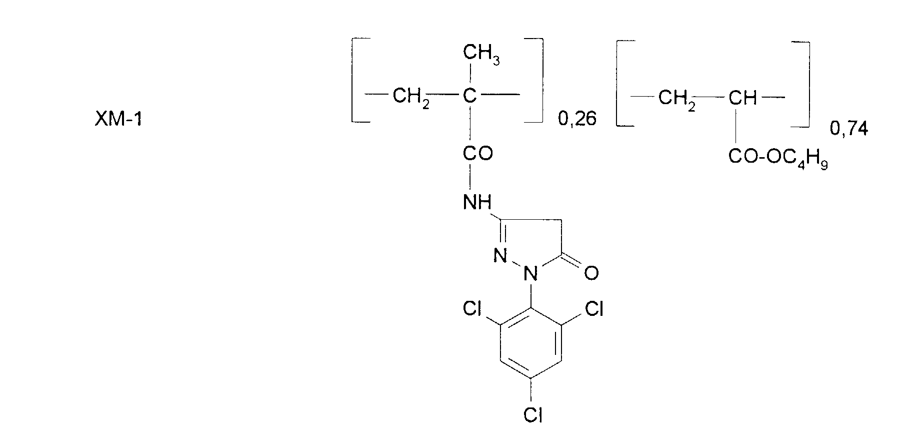

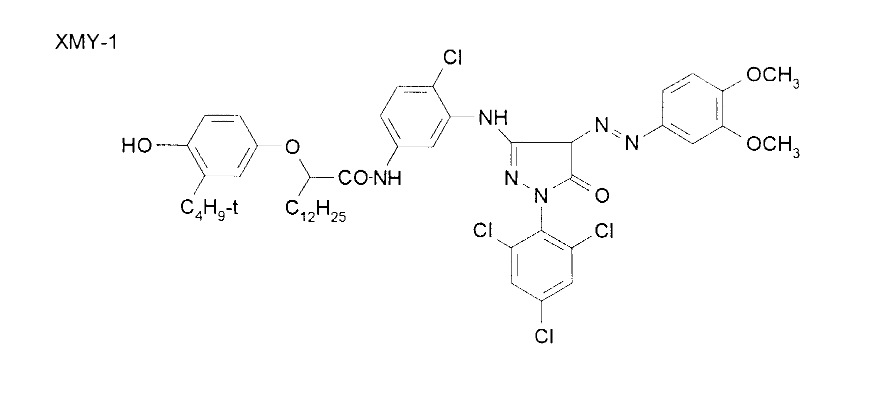

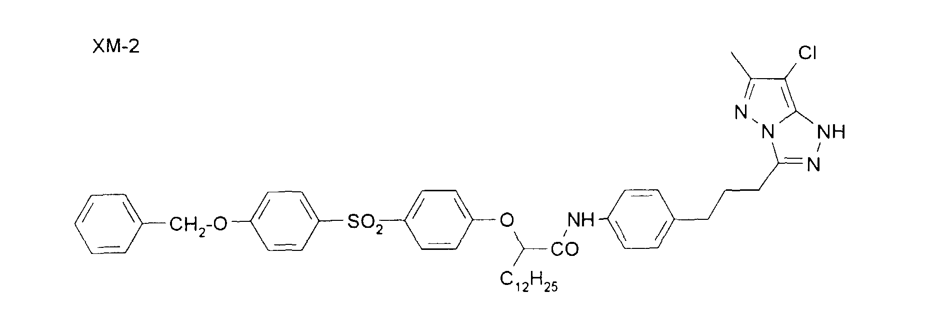

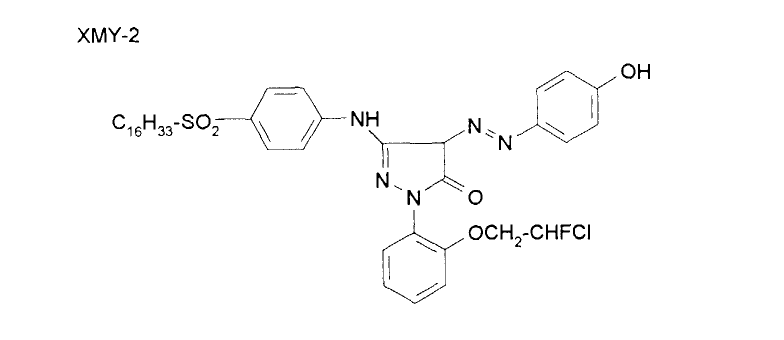

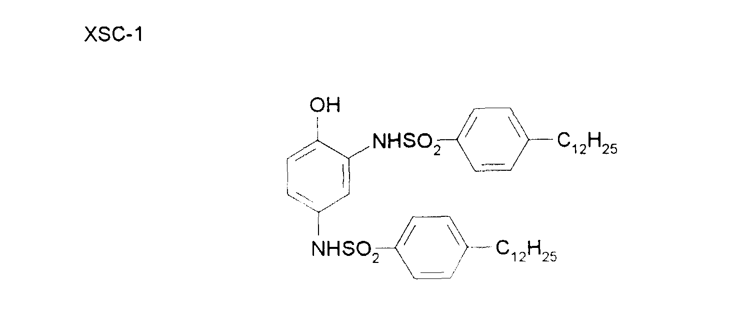

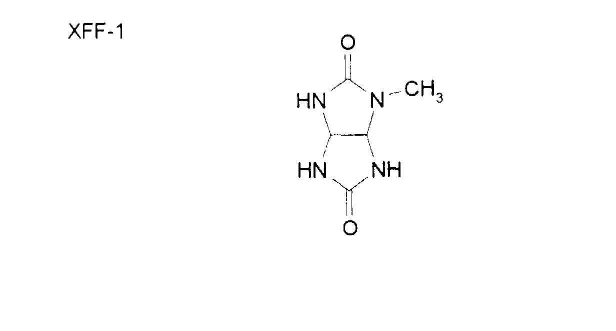

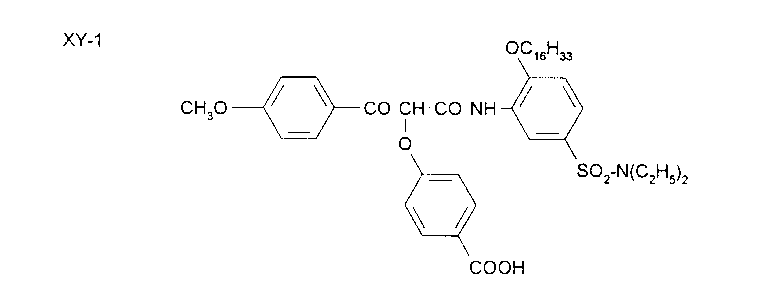

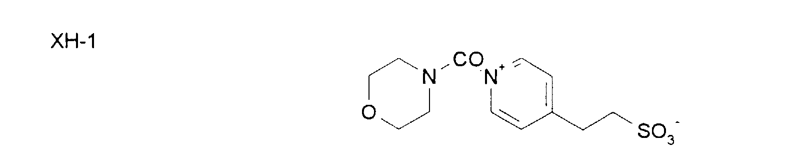

Nach Aufbelichten eines Graukeils wird die Entwicklung nach "The British Journal of Photography", 1974, Seiten 597 und 598 durchgeführt.

Die Schichtaufbauten 1B bis 1D unterscheiden sich durch Zusatz einer erfindungsgemäßen Substanz in der 7. Schicht. Die verwendeten Substanzen, Mengen und Ergebnisse sind in Tabelle 1 zusammengefaßt:

**Tabelle 1**

| Material | Substanz | Menge [mg/m²] | relative Empfind lichkeit Grün | Körnigkeit Purpur *) | Schleieranstieg Purpur **) | |
|---|---|---|---|---|---|---|
| 1A | - | - | 100 | 12 | 0,10 | Vergleich |
| 1B | V-1 | 20 | 99 | 10 | 0,03 | Erfindung |
| 1C | V-16 | 20 | 102 | 9 | 0,05 | Erfindung |
| 1D | V-26 | 20 | 102 | 10 | 0,04 | Erfindung |

| | | | | | | |
|---|---|---|---|---|---|---|
| *) Körnigkeit (RMS) bei Dichte 0,6 über Schleier, Werte x 1000 | | | | | | |
| **) Schleieranstieg nach zweiwöchiger Lagerung bei 60°C gegenüber bei 20°C gelagertem Material | | | | | | |

Wie man sieht, erfolgt bei den erfindungsgemäßen Materialien eine Verbesserung der Körnigkeit ohne Verschlechterung der Empfindlichkeit. Außerdem wird bei den erfindungsgemäßen Materialien ein geringerer Schleieranstieg bei Lagerung beobachtet.

### Beispiel 2

Schichtaufbau 2A unterscheidet sich von Schichtaufbau 1A des Beispiels 1 durch die Zusammensetzung der 8. Schicht.
- **Schicht 8:**: (Gelbfilterschicht)
0,25 g Gelatine
0,05 g Gelbfarbstoff GF-1
0,08 g Scavenger SC-1
0,40 g Formaldehydfänger XFF-1
0,08 g TKP

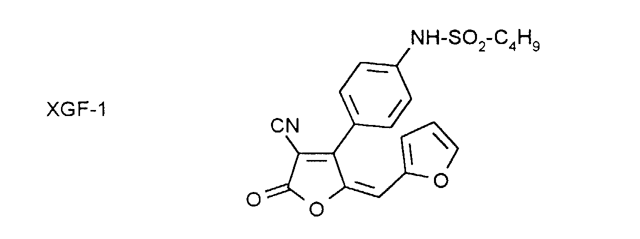

Die Schichtaufbauten 2B bis 2D unterscheiden sich durch Zusatz von V-16 in den Schichten 4 oder 5. Einsatzorte, Mengen und Ergebnisse sind in Tabelle 2 zusammengefaßt:

**Tabelle 2**

| Material | Schicht | Menge [mg/m²] | relative Empfindlichkeit Rot | Körnigkeit Blaugrün *) | Schleieranstieg Blaugrün **) | |
|---|---|---|---|---|---|---|
| 2A | - | - | 100 | 13,5 | 0,15 | Vergleich |
| 2B | 4. | 29 | 99 | 10,5 | 0,07 | Erfindung |
| 2C | 5. | 34 | 102 | 11,0 | 0,10 | Erfindung |

| | | | | | | |
|---|---|---|---|---|---|---|
| *) Körnigkeit (RMS) bei Dichte 0,6 über Schleier, Werte x 1000 | | | | | | |
| **) Schleieranstieg nach zweiwöchiger Lagerung bei 60°C gegenüber bei 20°C gelagertem Material | | | | | | |

Wie man sieht, erfolgt bei den erfindungsgemäßen Materialien eine Verbesserung der Körnigkeit ohne Verschlechterung der Empfindlichkeit. Außerdem wird bei den erfindungsgemäßen Materialien ein geringerer Schleieranstieg bei Lagerung beobachtet.

## Patentansprüche

1. Lichtempfindliches fotografisches Aufzeichnungsmaterial mit mindestens einer lichtempfindlichen Silberhalogenidschicht und gegebenenfalls weiteren Schichten, dadurch gekennzeichnet, daß es in mindestens einer seiner Schichten eine Verbindung der allgemeinen Formel I enthält 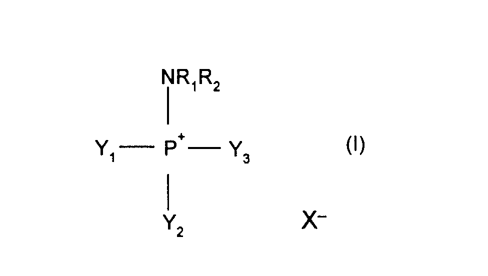 worin bedeuten:
Y₁, Y₂, Y₃ je einen der folgenden Reste 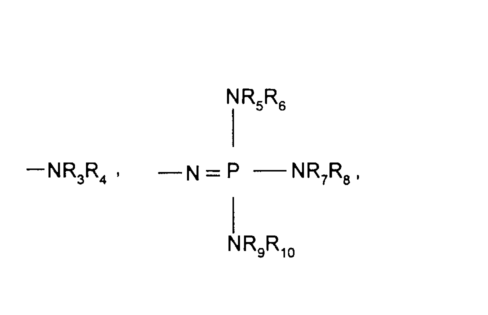 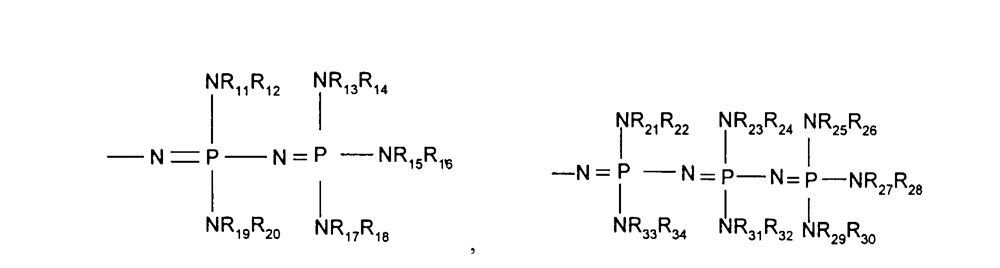
R₁ bis R₃₄ H, Alkyl oder Aryl; zwei am gleichen N-Atom befindliche Reste (R₁ bis R₃₄) können einen mindestens ein N-Atom und gegebenenfalls weitere Heteroatome enthaltenden 5-, 6- oder höhergliedrigen Ring vervollständigen, mit der Maßgabe, daß es sich nicht um einen 1-Pyridinyl-Rest handelt; zwei an benachbarten N-Atomen befindliche Reste (R₁ bis R₃₄) können unter Einbeziehung der beiden N-Atome und mindestens eines P-Atoms einen Ring vervollständigen;
X⁻ ein zum Ladungsausgleich erforderliches Anion, z.B. Cl⁻, Br⁻ oder Tosylat (TosO⁻).

2. Aufzeichnungsmaterial nach Anspruch 1, dadurch gekennzeichnet, daß die Verbindung der Formel I in mindestens einer blauempfindlichen, einer grünempfindlichen und/oder einer rotempfindlichen Silberhalogenidemulsionsschicht enthalten ist.

3. Aufzeichnungsmaterial nach Anspruch 1, dadurch gekennzeichnet, daß die Verbindung der Formel I in mindestens einer zu einer blauempfindlichen, einer grünempfindlichen oder einer rotempfindlichen Silberhalogenidemulsionsschicht benachbarten nicht-lichtempfindlichen Bindemittelschicht enthalten ist.

4. Aufzeichnungsmaterial nach Anspruch 2, dadurch gekennzeichnet, daß eine Verbindung der Formel I in mindestens einer blauempfindlichen, einer grünempfindlichen und/oder einer rotempfindlichen Silberhalogenidemulsionsschicht sowie in mindestens einer hierzu benachbarten nicht-lichtempfindlichen Bindemittelschicht enthalten ist.

## Claims

1. Photosensitive photographic recording material having at least one photosensitive silver halide layer and optionally further layers, characterised in that it contains a compound of the general formula I in at least one of its layers 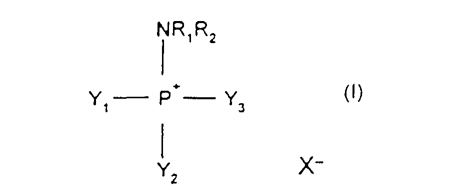 in which:
Y₁, Y₂, Y₃ each mean one of the following residues 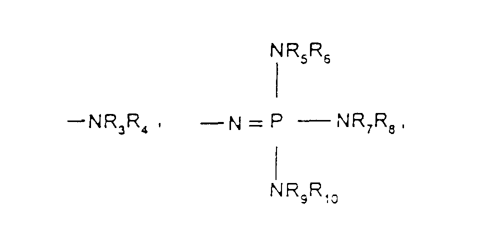 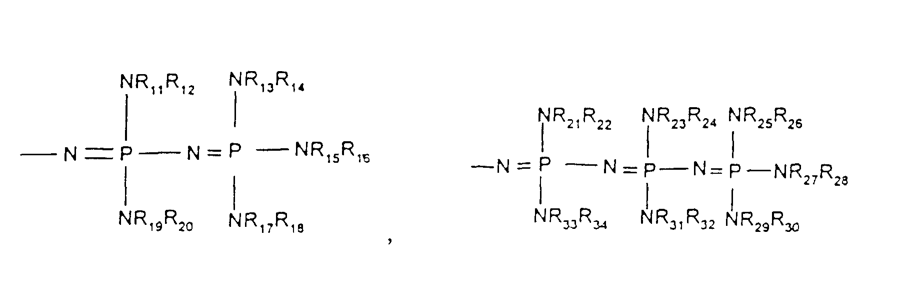
R₁ to R₃₄ mean H, alkyl or aryl; two residues (R₁ to R₃₄) located on the same N atom may complete a 5-, 6- or greater-membered ring containing at least one N atom and optionally further heteroatoms, providing that said ring does not comprise a 1-pyridinyl residue; two residues (R₁ to R₃₄) located on adjacent N atoms may complete a ring involving both N atoms and at least one P atom;
X⁻ means an anion required to balance the charge, for example Cl, Br or tosylate (TosO⁻).

2. Recording material according to claim 1, characterised in that the compound of the formula I is present in at least one blue-sensitive, one green-sensitive and/or one red-sensitive silver halide emulsion layer.

3. Recording material according to claim 1, characterised in that the compound of the formula I is present in at least one non-photosensitive binder layer adjacent to a blue-sensitive, green-sensitive or red-sensitive silver halide emulsion layer.

4. Recording material according to claim 2, characterised in that the compound of the formula I is present in at least one blue-sensitive, one green-sensitive and/or one red-sensitive silver halide emulsion layer and in at least one non-photosensitive binder layer adjacent thereto.

## Revendications

1. Matériau d'enregistrement photographique photosensible avec au moins une couche à l'halogénure d'argent photosensible et éventuellement d'autres couches, caractérisé en ce qu'au moins une de ses couches contient un composé de Formule générale I : 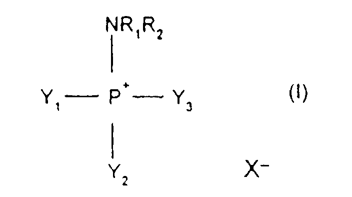 dans laquelle :
Y₁, Y₂, Y₃ signifient chacun un des radicaux suivants 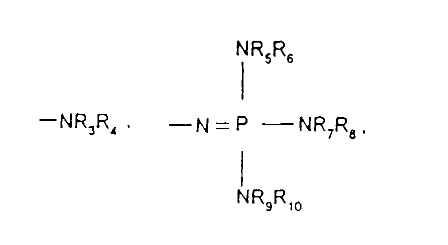 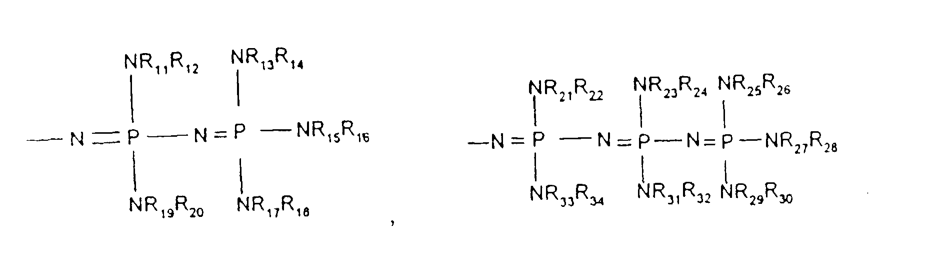
R₁ à R₃₄ signifient H, un groupe alkyle ou aryle ; deux radicaux (R₁ à R₃₄) se trouvant sur le même atome N peuvent compléter un cycle à 5, 6 chaînons ou plus, contenant au moins un atome N et éventuellement d'autres hétéroatomes, avec la condition qu'il ne s'agisse pas d'un radical 1-pyridinyle; deux radicaux (R₁ à R₃₄) se trouvant sur des atomes N voisins peuvent compléter un cycle par réunion des deux atomes N et d'au moins un atome P;
X⁻ signifie un anion nécessaire pour l'équilibre de charge, par exemple Cl⁻, Br⁻ ou le tosylate (TosO⁻).

2. Matériau d'enregistrement selon la revendication 1, caractérisé en ce que le composé de formule I est contenu dans au moins une couche d'émulsion d'halogénure d'argent sensible au bleu, une sensible au vert et/ou une sensible au rouge.

3. Matériau d'enregistrement selon la revendication 1, caractérisé en ce que le composé de formule I est contenu dans au moins une couche de liant non photosensible voisine d'une couche d'émulsion d'halogénure d'argent sensible au bleu, une sensible au vert ou une sensible au rouge.

4. Matériau d'enregistrement selon la revendication 2, caractérisé en ce que le composé de formule I est contenu dans au moins une couche d'émulsion d'halogénure d'argent sensible au bleu, une sensible au vert et/ou une sensible au rouge ainsi que dans au moins une couche de liant non photosensible voisine de celles-ci.
